# EUROPEAN PATENT APPLICATION

(11) **EP 4 632 919 A1**
(43) Date of publication of application: **15.10.2025**
(21) Application number: 25166147.6
(22) Date of filing: 25.03.2025
(51) Int. Cl.: H01M 50/342, H01M 50/383, H01M 50/584, H01M 50/209

(54) **BATTERY PACK**

(30) Priority: 05.04.2024 KR 20240046954
(71) Applicant: SAMSUNG SDI CO., LTD., Yongin-si, Gyeonggi-do 17084 (KR)
(72) Inventor: KIM, Jungheon, 17084 Yongin-si (KR)
(74) Representative: Marks & Clerk LLP

(57) **Abstract**

Provided is a battery pack. An insulating protective sheet having the plurality of thin units may be disposed on the vent for discharging gas or relieving pressure accumulated inside each of the plurality of battery cells forming the battery pack. The battery pack may suppress eruption of flames or scattering of high-temperature solids in addition to relief of internal pressure or discharge of internal gas, thereby preventing spread of flames to other neighboring battery cells or chain ignition therebetween.

## Description

### BACKGROUND

### 1. Field

One or more embodiments relate to a battery pack.

### 2. Description of the Related Art

In general, secondary batteries can be charged and discharged, unlike primary batteries that cannot be charged. Secondary batteries are used as energy sources for mobile devices, electric vehicles, hybrid vehicles, electric bicycles, uninterruptible power supplies, etc. Also, depending on the type of external devices to which secondary batteries are applied, the secondary batteries may be used in the form of a single battery or a pack in which a plurality of batteries are connected and bundled into a unit.

A small mobile device, such as a mobile phone, may operate for a certain period of time with only the output and capacity of a single battery. However, when use for a long period of time and high power are required, such as in a large-sized mobile device that includes a laptop or an electric vehicle or a hybrid vehicle that consumes a lot of power, a pack type including a plurality of batteries is preferred due to the output and capacity thereof. Also, the output voltage or output current may be increased according to the number of batteries embedded therein.

The above information disclosed in this Background section is for enhancement of understanding of the background of the present disclosure, and therefore, it may contain information that does not constitute prior art.

### SUMMARY

One or more embodiments of the present disclosure relate to a battery pack in which an insulating protective sheet having a plurality of thin units is on a vent of a battery cell for discharging gas or relieving pressure accumulated inside the battery cell. The insulating protective sheet is configured to suppress the eruption of flames and/or the scattering of high-temperature solids, thereby preventing the spread of flames to other neighboring battery cells and/or chain ignition reaction therebetween.

Additional aspects will be set forth in part in the description which follows and, in part, will be apparent from the description, or may be learned by practice of the presented embodiments of the present disclosure.

According to one or more embodiments, a battery pack includes battery cells arranged in a first direction, each having a vent for discharging gas, and insulating protective sheets configured to respectively cover or overlie first surfaces of the battery cells in which the vents (i.e. of that battery cell) are formed. Each of the insulating protective sheets has a thin pattern including an array of thin units with sloping gradient cross-sectional profiles in a form converging from an open structure in an outer surface toward an inner surface of the insulating protective sheet. Each of the insulating protective sheets forms a closed structure in the inner surface of the insulating protective sheet facing the battery cell and forms the open structure in the outer surface of the insulating protective sheet opposite to the battery cell.

In some embodiments, the thin pattern may form the closed structure in the inner surface of the insulating protective sheet to fluidly isolate an upper region from a lower region of the insulating protective sheet.

In some embodiments, the thin unit may have an open circular shape in the outer surface of the insulating protective sheet.

In some embodiments, the thin unit may have a wedge shape including a vertex into which the open circular shape in the outer surface of the insulating protective sheet converges toward the inner surface of the insulating protective sheet.

In some embodiments, the thin unit may have a truncated wedge shape in which an open circular shape having a first diameter in the outer surface of the insulating protective sheet converges, toward the inner surface of the insulating protective sheet, into a circular shape having a second diameter less than the first diameter.

In some embodiments, the thin unit may have a three-dimensional cone shape or a truncated cone shape.

In some embodiments, the insulating protective sheet may include a central region including a dense arrangement of the thin units and a peripheral region surrounding the central region and not including the thin pattern.

In some embodiments, in the inner surface of the insulating protective sheet facing the battery cell, the thin unit formed in the central region of the insulating protective sheet may form a substantially flat surface with the peripheral region of the insulating protective sheet.

In some embodiments, in the outer surface of the insulating protective sheet opposite to the battery cell, the thin unit formed in the central region of the insulating protective sheet may form a structure recessed from the peripheral region of the insulating protective sheet.

In some embodiments, the insulating protective sheet may include a pair of long sides respectively extending, along a pair of main surfaces forming long sides of the first surface of the battery cell, in a second direction intersecting with the first direction and corresponding a longitudinal direction and a pair of short sides respectively extending, along a pair of side surfaces forming short sides of the first surface of the battery cell, in the first direction corresponding to the width direction.

In some embodiments, the thin units may be arranged in rows in a second direction corresponding to a longitudinal direction of the insulating protective sheet and arranged in rows in the first direction corresponding to a width direction of the insulating protective sheet.

In some embodiments, the thin units may form a dense arrangement while valley regions between thin units adjacent to each other in a second direction corresponding to a longitudinal direction of the insulating protective sheet accommodate thin units in different rows adjacent to each other in the first direction.

In some embodiments, the thin units may include a central thin unit and satellite thin units surrounding the central thin unit.

In some embodiments, a second distance between the satellite thin units adjacent to each other along a circumference of the central thin unit may be less than a first distance between the central thin unit and each of the satellite thin units.

In some embodiments, the first surface of the battery cell in which the vent is formed may correspond to any one of an upper surface or a lower surface of the battery cell.

In some embodiments, an adhesive tape may be on the inner surface of the insulating protective sheet and couple between the insulating protective sheet to the first surface of the battery cell.

In some embodiments, the insulating protective sheet may include a central region, in which the thin pattern including a dense arrangement of the thin units is formed, and a peripheral region surrounding the central region and not including the thin pattern, and the adhesive tape may cover an entire area of the insulating protective sheet across the central region and the peripheral region of the insulating protective sheet.

In some embodiments, the insulating protective sheet and the adhesive tape may electrically insulate the first surface of the battery cell based on a thickness of the adhesive tape and a thickness of the each insulating protective sheet at the thin pattern.

According to embodiments of present disclosure, the insulating protective sheet may include aerogel or mica.

In some embodiments, a critical rupture pressure of the thin pattern may be set from design parameters of the thin pattern which include a diameter of an open circular shape formed in the outer surface of the insulating protective sheet and a distance between closest thin units.

At least some of the above and other features of the invention are set out in the claims.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a part exploded perspective view of a battery pack according to embodiments of the present disclosure;
FIG. 2 is a perspective view of a battery cell of FIG. 1;
FIG. 3 is a diagram showing an outer surface of an insulating protective sheet of FIG. 1;
FIG. 4 is a diagram showing an inner surface of the insulating protective sheet of FIG. 1;
FIG. 5 is a cross-sectional view of an insulating protective sheet, taken along line V-V' of FIG. 3;
FIG. 6 is a perspective view in which the insulating protective sheet of FIG. 5 is cut;
FIG. 7 shows an insulating protective sheet according to other embodiments different from the insulating protective sheet of FIG. 6;
FIG. 8 is a cross-sectional view of the insulating protective sheet of FIG. 7; and
FIG. 9 is a part exploded perspective view of a battery pack according to other embodiments of the present disclosure.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," if preceding a list of elements, modify the entire list of elements and do not modify the individual elements of the list.

Hereinafter, a battery pack according to embodiments of the present disclosure is described with reference to the accompanying drawings.

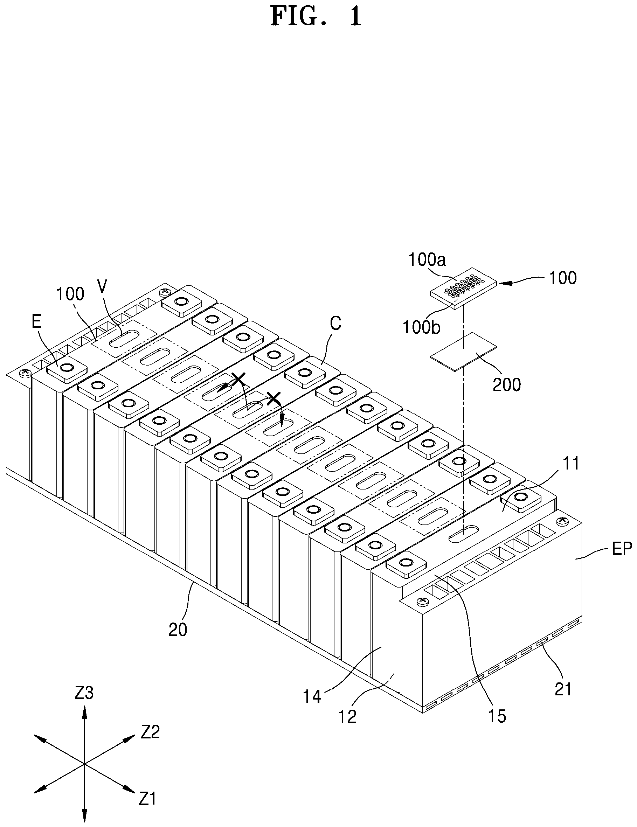

FIG. 1 is a part exploded perspective view of a battery pack according to embodiments of the present disclosure.

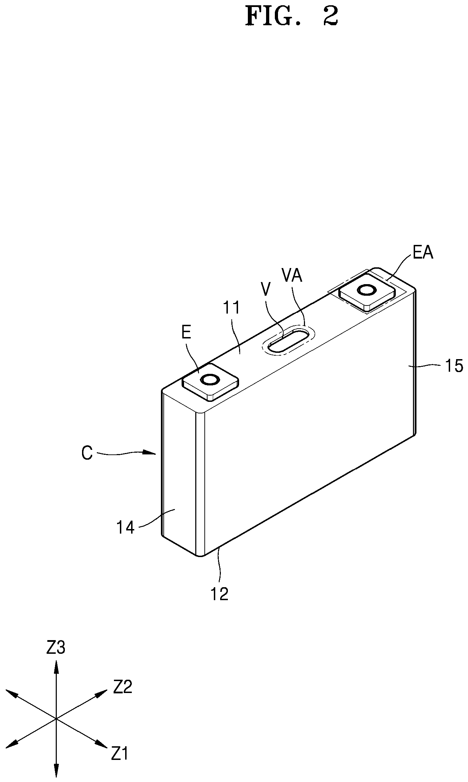

FIG. 2 is a perspective view of a battery cell C of FIG. 1.

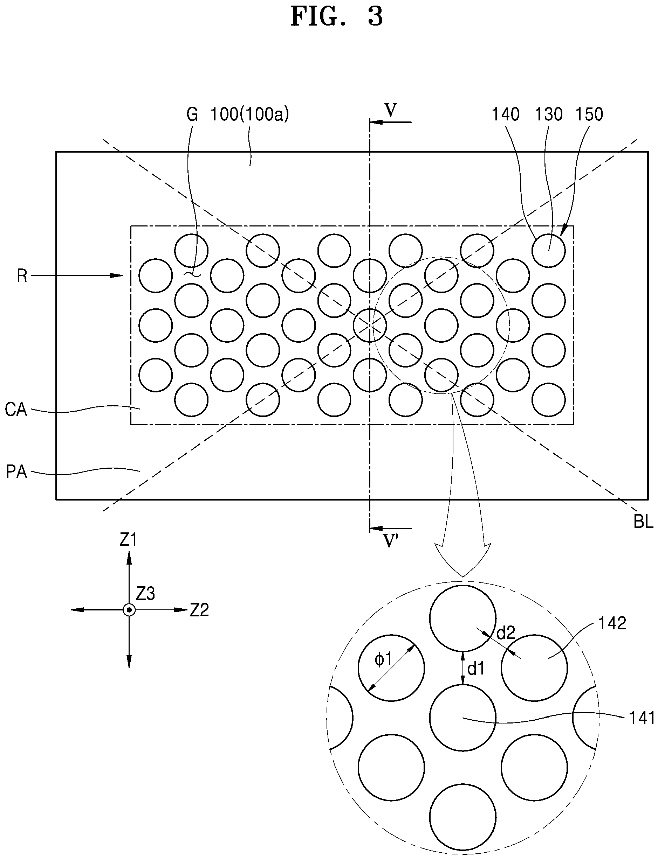

FIG. 3 is a diagram showing an outer surface 100a of an insulating protective sheet 100 of FIG. 1.

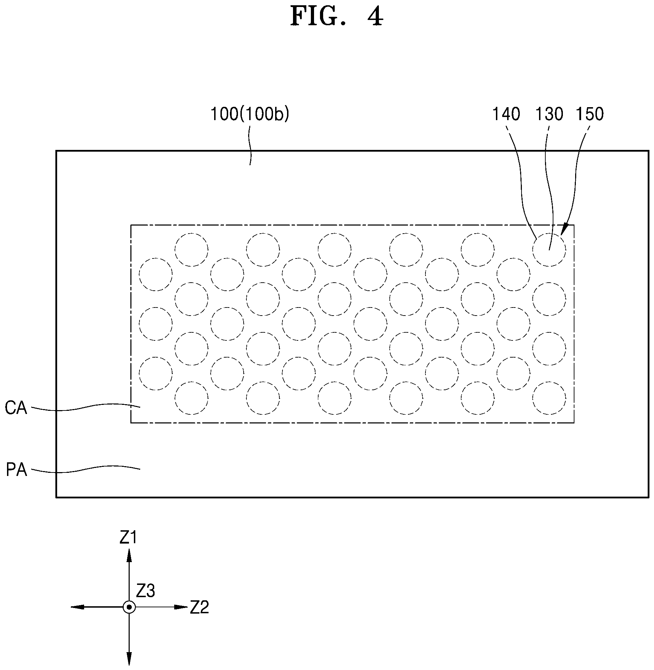

FIG. 4 is a diagram showing an inner surface 100b of the insulating protective sheet 100 of FIG. 1.

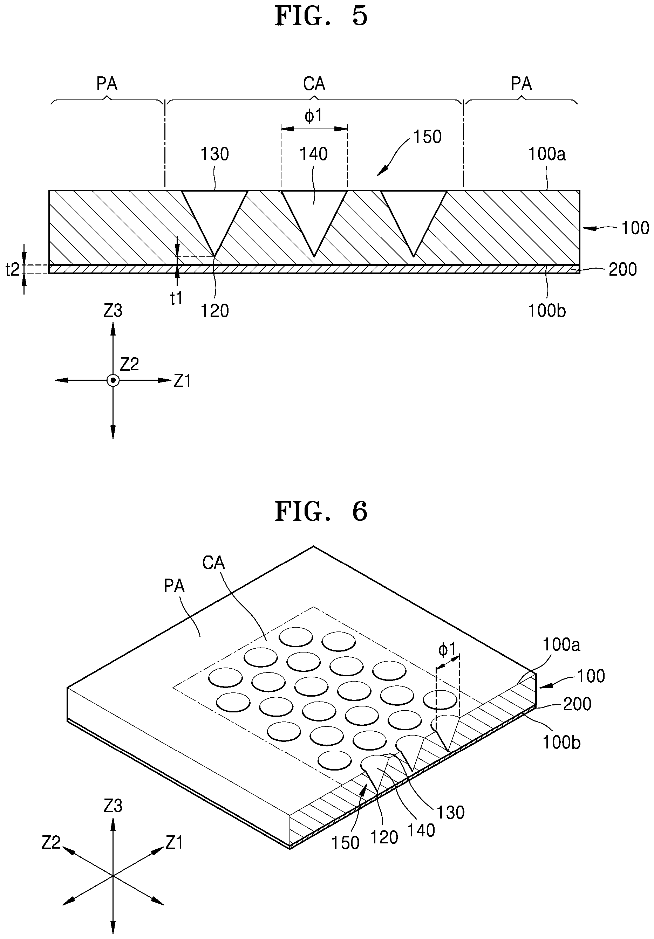

FIG. 5 is a cross-sectional view of the insulating protective sheet 100, taken along line V-V' of FIG. 3.

FIG. 6 is a perspective view in which the insulating protective sheet 100 of FIG. 5 is cut.

The battery pack according to embodiments of the present disclosure may include a plurality of battery cells C arranged in a first direction Z1, each having a vent V for discharging gas; and a plurality of insulating protective sheets 100 configured to respectively cover first surfaces (corresponding to upper surfaces 11) of the battery cells C in which the vents V are formed, each of the insulating protective sheets 100 having a thin pattern 150 including an array of a plurality of thin units 140 with sloping gradient cross-sectional profiles in a form converging from an open structure 130 in an outer surface 100a toward an inner surface 100b of the insulating protective sheet 100. Each of the insulating protective sheets 100 forms a closed structure 120 in the inner surface 100b of the insulating protective sheet 100 facing the battery cell C and forms the open structure 130 in the outer surface 100a of the insulating protective sheet 100 opposite to the battery cell C.

In embodiments of present disclosure, the feature in which the insulating protective sheet 100 forms the closed structure 120 in the inner surface 100b may indicate that the insulating protective sheet 100 extending on the plane formed by the first and second directions Z1 and Z2 fluidly separates the upper region and the lower region from each other in a third direction Z3 that intersects with the first and second directions Z1 and Z2 and may indicate that the upper region and the lower region of the insulating protective sheet 100 are fluidly separated from each other in the third direction Z3 at least by the inner surface 100b of the insulating protective sheet 100.

The battery pack according to embodiments of the present disclosure may include a plurality of battery cells C, and the plurality of battery cells C may be arranged in the first direction Z1. As described below, neighboring (adjacent) battery cells C of the plurality of battery cells C arranged in the first direction Z1 may be arranged such that main surfaces 15 thereof face each other.

Each of the plurality of battery cells C forming the battery pack may include an upper surface 11 having the vent V configured to relieve the internal pressure accumulated inside the battery cell C and to discharge the gas accumulated inside the battery cell C, a bottom surface 12 opposite to the upper surface 11, a pair of main surfaces 15 having relatively large areas and connecting the upper surface 11 to the bottom surface 12 of the battery cell C, and a pair of side surfaces 14 having relatively small areas. In embodiments of present disclosure, the pair of main surfaces 15 may be arranged to face each other in the first direction Z1 and the pair of side surfaces 14 may be arranged to face in the second direction Z2 that intersects with the first direction Z1. Also, the upper surface 11 and the bottom surface 12 of the battery cell C may be arranged to face in the third direction Z3 that intersects with the first and second directions Z1 and Z2. In one or more embodiments, the pair of main surfaces 15 may be arranged to face each other in the first direction Z1 corresponding to the arrangement direction of the battery cells C in which the plurality of battery cells C are arranged, and the battery cells C adjacent to each other in the first direction Z1 may be arranged such that the main surfaces 15 thereof face each other.

The upper surface 11 of the battery cell C may have an electrode E that forms a path for charging and discharging current of the battery cell C, in addition to the vent V for discharging internal pressure or gas. In embodiments of present disclosure, the vent V may be formed in a central region CA of the upper surface 11 of the battery cell C and in some embodiments it is not formed in a peripheral region PA that forms the peripheral outline of the upper surface 11 of the battery cell C. In one or more embodiments, the vent V may be configured to relieve pressure accumulated inside the battery cell C or to discharge gas accumulated inside the battery cell C. In order to induce uniform (or substantially uniform) internal pressure relief or uniform (or substantially uniform) gas discharge throughout the entire interior of the battery cell C and to quickly relieve the internal pressure of the battery cell C or discharge the gas from the battery cell C, the vent V may be in the central region CA of the upper surface 11 of the battery cell C. In one or more embodiments, the vent V might not be in the peripheral region PA of the upper surface 11 of the battery cell C.

In embodiments of present disclosure, the battery pack may include the insulating protective sheet 100 configured to cover the upper surface 11 of the battery cell C in which the vent V is formed, and the insulating protective sheet 100 may completely cover the upper surface 11 of the battery cell C or partially cover the upper surface 11 of the battery cell C. In embodiments of present disclosure, the feature in which the insulating protective sheet 100 covers the upper surface 11 of the battery cell C may indicate that the insulating protective sheet 100 covers at least a portion of the upper surface 11 of the battery cell C. In one or more embodiments, this feature may indicate that the insulating protective sheet 100 covers the vent V corresponding to a portion of the upper surface 11 of the battery cell C and may indicate that the insulating protective sheet 100 covers at least the vent V.

In embodiments of present disclosure, the thin pattern 150 in the insulating protective sheet 100 may cover the vent V formed in a portion of the upper surface 11 of the battery cell C. In embodiments of present disclosure, the thin pattern 150 of the insulating protective sheet 100 and the vent V in a portion of the upper surface 11 of the battery cell C may at least partially overlap. In embodiments of present disclosure, the thin pattern 150 of the insulating protective sheet 100 may have an area that sufficiently covers the vent V formed in the upper surface 11 of the battery cell C. In one or more embodiments, the thin pattern 150 of the insulating protective sheet 100 may be sufficiently large to cover the area of the vent V formed in the upper surface 11 of the battery cell C. As described above, in embodiments of present disclosure, the thin pattern 150 formed in the insulating protective sheet 100 may have an area that sufficiently covers the vent V that is configured to relieve the accumulation of pressure inside the battery cell C or to discharge gas accumulated inside the battery cell C. In one or more embodiments, pressure released from the inside of the battery cell C via the vent V, flames ejected toward the outside of the battery cell C together with gas, or flying products (such as solid matter) accompanying the flames, may be prevented (or at least mitigated) from being ejected to the outside via the thin pattern 150 of the insulating protective sheet 100. In one or more embodiments, the ejection of high-temperature flying products that may accompany the flames is suppressed, and other battery cells C forming the battery pack may be protected from the battery cell C in which an event has occurred.

In embodiments of present disclosure, in the battery cell C, high internal pressure may be accumulated inside the battery cell C due to gas generation in an abnormal situation, such as overheating or explosion, and thus, the internal gas may accumulate at high pressure. In one or more embodiments, as the internal pressure or gas of the battery cell C is released due to the rupture of the vent V, solids inside the battery cell C may scatter from the vent V together with the gas, depending on the pressure difference between the high pressure inside the battery cell C and the atmospheric pressure outside the battery cell C. Absent the insulating protective sheet 100, the solids inside the battery cell C together with the released gas may be scattered toward other adjacent battery cells C, which may damage other neighboring battery cells C or spread the flame to other neighboring battery cells C. Also, the release of pressure or discharge of gas inside the battery cell C may accompany the flame. The flame may spread toward other neighboring battery cells C due to the release of gas accompanying the flame, for example, from the battery cell C in which the event has been occurred.

In embodiments of present disclosure, the thin pattern 150 of the insulating protective sheet 100 for covering the vent V of the battery cell C may block (or at least mitigate) the propagation of flame and/or the scattering of solids accompanying the release of gas from the vent V of the battery cell C. The spread of flame or scattering of solids from the battery cell C in which the event has occurred to other neighboring battery cells C may be suppressed (or at least mitigated), and the propagation of a chain of flames toward other battery cells C forming the battery pack or the occurrence of the event may be blocked (or at least mitigated). To this end, the thin pattern 150 of the insulating protective sheet 100 may be formed in the vent V through which the propagation of flame or scattering of solids occurs with the discharge of gas. In embodiments of present disclosure, in order to suppress (or at least mitigate) the propagation of flame or scattering of solids that may be accompanied by the discharge of gas from the battery cell C in which the event has occurred, the thin pattern 150 of the insulating protective sheets 100 may be on the vents V of the battery cells C forming the battery pack to cover at least a portion of the vents V.

In embodiments of present disclosure, the thin pattern 150 of the insulating protective sheet 100 may completely cover the vent V of the battery cell C or partially cover the vent V of the battery cell C. In one or more embodiments, the thin pattern 150 of the insulating protective sheet 100 may cover at least a portion of the vent V of the battery cell C. In embodiments of present disclosure, the insulating protective sheet 100 may cover at least a portion of the upper surface 11 of the battery cell C, and the thin pattern 150 formed in the insulating protective sheet 100 may cover at least the vent V of the battery cell C, which is part of the upper surface 11 of the battery cell C. Based on the vent V in the upper surface 11 of the battery cell C, the insulating protective sheet 100 and the thin pattern 150 in the insulating protective sheet 100 may cover a portion of the upper surface 11 of the battery cell C or cover at least the vent V, which is part of the upper surface 11 of the battery cell C. In embodiments of present disclosure, the insulating protective sheet 100 may be on the upper surface 11 of the battery cell C, and the thin pattern 150 of the insulating protective sheet 100 may cover a vent region VA (see FIG. 2) in which the vent V is formed in the upper surface 11 of the battery cell C. In one or more embodiments, the thin pattern 150 of the insulating protective sheet 100 may cover the vent V in the upper surface 11 of the battery cell C. In embodiments of present disclosure, the insulating protective sheet 100 may cover the vent region VA including the vent V, and the thin pattern 150 of the insulating protective sheet 100 may cover the vent V. In embodiments of present disclosure, the vent region VA covered by the insulating protective sheet 100 may represent a region that is wider than the vent V, and which includes the vent V and surrounding regions of the vent V. In embodiments of present disclosure, the upper surface 11 of the battery cell C may include a vent region VA including the vent V and a vicinity around the vent V and an electrode region EA (see FIG. 2) including the electrode E and a vicinity around the electrode E. The vent region VA and the electrode region EA may include the vicinity around the vent V and the vicinity around the electrode E, respectively, so as not to overlap each other. In embodiments of present disclosure, the vicinity of the vent V may include a portion of the vent region VA covered by the insulating protective sheet 100, and may provide a coupling position for forming a bond between the insulating protective sheet 100 and the upper surface 11 of the battery cell C and, for example, provide a coupling position for mediating the coupling between the insulating protective sheet 100 and the upper surface 11 of the battery cell C. The vicinity of the electrode E may provide a coupling position for coupling or an insulating position for insulation between the electrode E and a cap plate forming the upper surface 11 of the battery cell C. In one or more embodiments, a welding point forming the coupling position may be provided around the electrode E, or an insulating gasket forming the insulating position may be provided.

In embodiments of present disclosure, the insulating protective sheet 100 may include the peripheral region PA providing the coupling position and the central region CA in which the thin pattern 150 is formed. See Fig. 3. In embodiments of present disclosure, the insulating protective sheet 100 may include the peripheral region PA in which the thin pattern 150 is not formed and the central region CA in which thin pattern 150 is formed.

In embodiments of present disclosure, an adhesive tape 200 may be located between the insulating protective sheet 100 and the upper surface 11 of the battery cell C to achieve the coupling therebetween. See Fig. 2. In embodiments of present disclosure, the adhesive tape 200 located between the insulating protective sheet 100 and the battery cell C may extend across both the central region CA in which the thin pattern 150 is formed and the peripheral region PA in which the thin pattern 150 is not formed. The central region CA in which the thin pattern 150 is formed may generally face the vent V for relieving the internal pressure of the battery cell C or discharging accumulated internal gas. It may be understood that the insulating protective sheet 100 is attached to the upper surface 11 of the battery cell C by the adhesive tape 200 that is attached to the peripheral region PA in which the thin pattern 150 is not formed rather than the central region CA of the insulating protective sheet 100 facing the vent V.

In embodiments of present disclosure, the insulating protective sheet 100 may include the thin pattern 150 that covers at least the vent V of the battery cell C, and the thin pattern 150 may include a plurality of non-penetrating grooves arranged in a regular pattern (e.g. a staggered grid pattern). In embodiments of present disclosure, the thin pattern 150 may be formed as the non-penetrating grooves that are not perforated, and the cap plate forming the upper surface 11 of the battery cell C may be covered with the thin pattern 150 and insulated from the outside. In one or more embodiments, the insulating protective sheet 100 including the thin pattern 150 may provide electrical insulation for the battery cell C. While providing the electrical insulation to the cap plate forming the upper surface 11 of the battery cell C, the insulating protective sheet 100 may prevent (or at least mitigate) electrical interference between an external environment and any polarity (e.g. a negative polarity) that may be electrically connected to the cap plate forming the upper surface 11 of the battery cell C.

In embodiments of the present disclosure, the cap plate forming the upper surface 11 of the battery cell C may have either a positive polarity or a negative polarity of the battery cell C (e.g. a negative polarity). As described above, for the purpose of insulating the upper surface 11 of the battery cell C with one polarity from the opposite polarity (the positive polarity) and insulating the upper surface 11 of the battery cell C with one polarity (the negative polarity) from the external environment, the insulating protective sheet 100 on the upper surface 11 of the battery cell C may have electrical insulation properties and provide electrical insulation using the thin pattern 150 provided as non-penetrating grooves. If the insulating protective sheet 100 has electrical conductivity unlike in the present disclosure, a positive electrode and a negative electrode formed together on the upper surface 11 of the battery cell C may be electrically connected to each other via the insulating protective sheet 100, and electrical conduction may be made between the upper surface 11 of the battery cell C and the external environment via the insulating protective sheet 100. As described below, the outer surface 100a of the insulating protective sheet 100 opposite to the battery cell C may have the open structure 130, but the inner surface 100b of the insulating protective sheet 100 facing the battery cell C may have the closed structure 120. The insulating protective sheet 100 may provide electrical insulation characteristics without exposing the cap plate forming the upper surface 11 of the battery cell C to the outside.

In embodiments of the present disclosure, the thin pattern 150 may form the closed structure 120 in the inner surface 100b of the insulating protective sheet 100 and form the open structure 130 in the outer surface 100a of the insulating protective sheet 100. The upper surface 11 of the battery cell C may be electrically insulated by the thin pattern 150 that is formed as the closed structure 120 in the inner surface 100b of the insulating protective sheet 100. Also, the thin pattern 150 may form the open structure 130 in the outer surface 100a of the insulating protective sheet 100, and thus, the rupture of the insulating protective sheet 100 may be induced by the thin pattern 150. In one or more embodiments, in order to release the internal pressure of the battery cell C or discharge the gas accumulated inside the battery cell C, the thin pattern 150 having the closed structure 120 in the inner surface 100b facing the battery cell C may be configured to rupture at a set critical rupture pressure or higher. This rupture may cause release of internal pressure of the battery cell C or discharge of gas.

In embodiments of present disclosure, the thin pattern 150 may have the closed structure 120 in the inner surface 100b of the insulating protective sheet 100 facing the battery cell C and the open structure 130 in the outer surface 100a of the insulating protective sheet 100 opposite to the battery cell C (i.e. facing away from the battery cell C). The thickness of the insulating protective sheet 100 at the thin pattern 150 may be less than the thickness of a portion of the insulating protective sheet 100 not including the thin pattern 150 (e.g. the thickness of the thin pattern 150 may be less than the thickness of the peripheral region PA of the insulating protective sheet 100 not including the thin pattern 150). In one or more embodiments, the rupture of the insulating protective sheet 100 may be induced by the thin pattern 150 having a relatively small thickness. The critical rupture pressure for rupturing the thin pattern 150 may be set by controlling the size (e.g. a diameter Φ1) of each of the thin units 140 forming the thin pattern 150, a thickness t1 of each of the thin units 140 forming the thin pattern 150, and the number of thin units 140 per unit area forming the thin pattern 150 (i.e. the density of thin units 140 forming thin pattern 150). The rupture of the thin pattern 150 or the insulating protective sheet 100 including the thin pattern 150 may be configured to be induced at the critical rupture pressure or higher.

In embodiments of present disclosure, a feature in which the thin pattern 150 has the closed structure 120 in the inner surface 100b of the insulating protective sheet 100 and the open structure 130 in the outer surface 100a of the insulating protective sheet 100 may indicate that the thin pattern 150 forms a substantially flat surface in the inner surface 100b of the insulating protective sheet 100 facing the battery cell C with the peripheral region PA of the insulating protective sheet 100 not including the thin pattern 150. Also, this feature may indicate that the thin pattern 150 has a structure recessed from the peripheral region PA of the insulating protective sheet 100, rather than forming a flat surface with the peripheral region PA of the insulating protective sheet 100 in the outer surface 100a of the insulating protective sheet 100 opposite to (i.e. facing away from) the battery cell C. In embodiments of the present disclosure, the thin pattern 150 may have a sloping gradient cross-sectional profile from the outer surface 100a of the insulating protective sheet 100 opposite to the battery cell C toward the inner surface 100b of the insulating protective sheet 100 facing the battery cell C. In embodiments of present disclosure, the thin pattern 150 may be gradually reduced in size (e.g. it may taper) from the outer surface 100a of the insulating protective sheet 100 toward the inner surface 100b of the insulating protective sheet 100. In one or more embodiments, the thin pattern 150 may have a wedge shape and may leave the thickness t1 of the thin pattern 150 while forming a vertex at a position before reaching the inner surface 100b of the insulating protective sheet 100. In one or more embodiments, the thickness t1 of the insulating protective sheet 100 at the thin pattern 150 (e.g. the thickness t1 of the thin pattern 150 corresponding to the remaining thickness of the insulating protective sheet 100 from the vertex of the thin unit 140 to the inner surface 100b of the insulating protective sheet 100, that is, the remaining thickness of the insulating protective sheet 100 after the thin unit 140 having the sloping gradient cross-sectional profile converges from the outer surface 100a toward the inner surface 100b to the vertex of the thin unit 140) may form parameters for setting the critical rupture pressure together with the size (diameter Φ1) of each of thin units 140 forming the thin pattern 150 and the number of thin units 140 per unit area forming the thin pattern 150 (i.e. the density of the thin units 140 forming the thin pattern 150).

In embodiments of present disclosure, each of the thin units 140 forming the thin pattern 150 may have a sloping gradient cross-sectional profile converging into a vertex from the outer surface 100a of the insulating protective sheet 100 toward the inner surface 100b of the insulating protective sheet 100 and may have the wedge-shaped cross-sectional profile with the slope. However, in other embodiments of the present disclosure, each of the thin units 140 forming the thin pattern 150 may have a different sloping gradient cross-sectional profile. For example, the thin unit 140 may have an inclined cross-sectional profile, such as a wedge shape, but may not converge into a vertex. Also, in addition to an oblique shape, the thin unit 140 may have an inclined cross-sectional profile having a non-oblique shape.

In embodiments of present disclosure, each of the thin units 140 forming the thin pattern 150 may have a circular open structure 130 toward the outer surface 100a of the insulating protective sheet 100 and may be formed as a three-dimensional cone shape having a sloping gradient cross-sectional profile from the outer surface 100a of the insulating protective sheet 100 toward the inner surface 100b of the insulating protective sheet 100. In an embodiment in which the thin unit 140 is axially symmetrical about the vertex of the thin unit 140, there is no anisotropy depending on the location or direction of pressure acting on the thin pattern 150. In one or more embodiments, the thin unit 140 may be ruptured by a preset critical rupture pressure while responding equally to pressure regardless of the application point or direction of the pressure. For example, if the outer surface 100a of the insulating protective sheet 100 does not have a circular open structure 130 but a polygonal open structure 130 unlike in the present disclosure, the thin pattern 150 may be ruptured by local stress concentration acting on the corners of the polygon while reacting a pressure somewhat different from the preset critical rupture pressure depending on the application point and direction of pressure. In embodiments of the present disclosure, the thin pattern 150 may have a three-dimensional shape symmetrical with respect to the vertex, such as a cone shape but may not have a three-dimensional shape having edges, such as a polygonal pyramid shape.

In embodiments of the present disclosure, the critical rupture pressure for rupturing the thin pattern 150 may be adjusted by controlling the parameters of the thin pattern 150, including the shape and density of the thin pattern 150. In embodiments of the present disclosure, the critical rupture pressure may be set by controlling the parameters of the thin pattern 150. Also, appropriate electrical insulation characteristics may be achieved by controlling the parameters of the thin pattern 150. In embodiments of the present disclosure, the electrical insulation characteristics of the thin pattern 150 may be determined by the thickness t1 of the thin pattern 150, for example, the remaining thickness of the insulating protective sheet 100 from the vertex of the thin pattern 150 to the inner surface 100b of the insulating protective sheet 100. In one or more embodiments, the electrical insulation characteristics of the insulating protective sheet 100 may be determined by the thickness t1 of a thin portion that forms the minimum thickness of the insulating protective sheet 100. For example, if the thickness t1 of the thin pattern 150 forming the minimum thickness of the insulating protective sheet 100 is not above a certain level, insulation breakdown may be caused by the voltage applied between the inner surface 100b and the outer surface 100a of the insulating protective sheet 100. Accordingly, the electrical insulation characteristics of the insulating protective sheet 100 may be lost due to the insulation breakdown. In embodiments of the present disclosure, in addition to the thickness t1 of the thin pattern 150 that forms the minimum thickness of the insulating protective sheet 100, which determines the electrical insulation characteristics of the insulating protective sheet 100, the thickness of the adhesive tape 200 (a double-sided tape) overlapping the insulating protective sheet 100 may be added. In one or more embodiments, as a thickness t2 of the adhesive tape 200 is added to the thickness t1 of the thin pattern 150, the total insulation breakdown voltage may increase, which may improve the electrical insulation characteristics.

In embodiments of present disclosure, the adhesive tape 200 for coupling the insulating protective sheet 100 to the upper surface 11 of the battery cell C (e.g. the double-sided tape that exerts adhesive force on both sides of the insulating protective sheet 100 and the upper surface 11 of battery cell C) may be applied between the insulating protective sheet 100 and the upper surface 11 of the battery cell C. The application of the adhesive tape 200 may additionally reinforce electrical insulation characteristics in addition to the thickness t1 of the thin pattern 150 that forms the minimum thickness of the insulating protective sheet 100. In embodiments of the present disclosure, the adhesive tape 200 may be on the insulating protective sheet 100 and overlap the insulating protective sheet 100 to reinforce the electrical insulation characteristics in addition to the thickness t1 of the thin pattern 150, which forms the minimum thickness for determining the electrical insulation characteristics of the insulating protective sheet 100, while coupling the insulating protective sheet 100 to the upper surface 11 of the battery cell C. In one or more embodiments, the thickness t1 of the thin pattern 150 of the insulating protective sheet 100 may be reduced to achieve the same insulation breakdown voltage, and the costs of the insulating protective sheet 100 may be reduced by reducing the total thickness of the insulating protective sheet 100. In one or more embodiments, with regard to the adhesive tape 200, the adhesive tape 200 may be attached to the inner surface 100b of the insulating protective sheet 100 facing the battery cell C. The adhesive tape 200 may be attached to the inner surface 100b of the insulating protective sheet 100 and overlap the insulating protective sheet 100. The adhesive tape 200 may extend across the thin pattern 150 formed in the insulating protective sheet 100 and completely cover the insulating protective sheet 100. In embodiments of the present disclosure, the insulating protective sheet 100 may extend across a plurality of thin patterns 150. The adhesive tape 200 may cover substantially the entire area of the insulating protective sheet 100 while extending not only in the central region CA, in which the plurality of thin patterns 150 are formed, but also in the peripheral region PA surrounding the central region CA. In embodiments of the present disclosure, the inner surface 100b of the insulating protective sheet 100 facing the battery cell C may form a flat surface in the central region CA in which the plurality of thin patterns 150 are formed and the peripheral region PA in which the thin patterns 150 are not formed. The adhesive tape 200 entirely covering the inner surface 100b, which is formed as a substantially flat surface, may enhance the electrical insulation characteristics of the insulating protective sheet 100. In one or more embodiments, the adhesive tape 200 may not only achieve coupling between the insulating protective sheet 100 and the battery cell C, but also increase an insulating thickness and thus the insulation breakdown voltage for electrical insulation characteristics. The adhesive tape 200 may be formed over substantially the entire area of the insulating protective sheet 100, and thus, both the insulating protective sheet 100 and the adhesive tape 200 may form the insulating thickness.

In embodiments of the present disclosure, the insulating protective sheet 100 having the thin pattern 150 may be on a cap plate forming the upper surface 11 of the battery cell C and may have an approximately rectangular sheet shape including a pair of long sides and a pair of short sides while extending along the pair of main surfaces 15 of the cap plate (the upper surface 11) and the pair of side surfaces 14 of the cap plate. The insulating protective sheet 100 may include the pair of long sides extending in the second direction Z2 along the pair of main surfaces 15 forming the long sides of the cap plate and the pair of short sides extending in the first direction Z1 along the pair of side surfaces 14 forming the short sides of the cap plate. In embodiments of the present disclosure, the insulating protective sheet 100 may have a rectangular sheet shape extending longitudinally in the second direction Z2 and extending widthwise in the first direction Z1. The thin pattern 150 formed on the insulating protective sheet 100 may include the plurality of thin units 140 which are arranged in a plurality of rows in the second direction Z2 and in a plurality of rows in the first direction Z1. The thin pattern 150 formed in the insulating protective sheet 100 may have an open circular structure in the outer surface 100a of the insulating protective sheet 100. In one or more embodiments, a row of thin units 140 arranged in a row R in the second direction Z2 may be arranged in a plurality of rows R in the first direction Z1. See Fig. 3. As an example, in order to form a dense arrangement of the plurality of thin units 140, a row R of the thin units 140 arranged in the second direction Z2 may be arranged between valley regions G of the thin units 140 of other rows R adjacent to each other in the first direction Z1, thereby forming the thin pattern 150 having high density per unit area (e.g. the thin units 140 may be staggered). In embodiments of the present disclosure, the plurality of thin units 140 forming the thin pattern 150 may be arranged in a row R in the second direction Z2, valley regions G may be formed between the thin units 140 adjacent to each other in the first direction Z1, and thin units 140 in another row R adjacent to each other in the second direction Z2 may be arranged in the valley regions G of the thin units 140 adjacent to each other. This arrangement may allow the plurality of thin units 140 to be densely arranged in the first and second directions Z1 and Z2. In one or more embodiments, the thin unit 140 may have a circular open structure 130 in the outer surface 100a opposite to the battery cell C, and the valley regions G may be formed between the thin units 140 adjacent to each other in the first direction Z1. Also, thin units 140 in another row R adjacent to each other in the second direction Z2 may be arranged in the valley regions G between thin units 140 that are adjacent to each other in the first direction Z1.

In embodiments of the present disclosure, the thin pattern 150 may include the plurality of thin units 140 densely packed in the central region CA of the insulating protective sheet 100, and the plurality of thin units 140 densely packed in the central region CA may be arranged in rows in the second direction Z2. The thin units 140 in other rows R adjacent to each other in the first direction Z1 may be arranged in the valley regions G between the thin units 140 adjacent to each other in the first direction Z1. In embodiments of the present disclosure, the thin pattern 150 may include the plurality of thin units 140 densely arranged in the central region CA of the insulating protective sheet 100. In embodiments of the present disclosure, the thin pattern 150 may set an appropriate critical breakdown pressure based on the size (a diameter Φ1) of each of the thin units 140 forming the thin pattern 150 and the distance between the thin units 140 closest to each other. In embodiments of the present disclosure, the diameter of an open circle of the thin pattern 150 in the outer surface 100a of the insulating protective sheet 100 may be from a minimum of about (approximately) 0.5 mm to a maximum of about (approximately) 1 mm, and the distance between open circles in the outer surface 100a of the insulating protective sheet 100, for example, the distance between the thin units 140 closest to each other may be from a minimum of about (approximately) 0.3 mm to a maximum of about (approximately) 3 mm. In embodiments of the present disclosure, if the diameter of the open circle of the thin unit 140 is less than the minimum value (approximately 0.5 mm), the critical rupture pressure for rupturing the insulating protective sheet 100 relatively increases, which may hinder the release of pressure from the inside of the battery cell C or the ejection of gas. Also, if the diameter of the open circle of the thin unit 140 is greater than the maximum value (approximately 1 mm), the critical rupture pressure for rupturing the insulating protective sheet 100 is relatively reduced, which may initiate breakage under normal operating conditions or cause breakage to occur during handling, such as distribution or assembly of the insulating protective sheet 100.

In embodiments of the present disclosure, a distance between the thin units 140 closest to each other (i.e. adjacent to each other) may represent the distance between a thin unit 140 and the nearest thin unit 140 among other neighboring thin units 140 surrounding the thin unit 140. This distance may represent a distance formed between one thin unit 140 and another thin unit 140 that is spaced apart from the one thin unit 140 by the shortest distance among other thin units 140 adjacent in all directions.

In embodiments of the present disclosure, the plurality of thin units 140 may be densely arranged in the first and second directions Z1 and Z2 in the central region CA of the insulating protective sheet 100. In one or more embodiments, the plurality of thin units 140 may form a dense array in which the thin units 140 in different adjacent rows R in the first direction Z1 are arranged in the valley regions G between adjacent thin units 140 of the plurality of thin units 140 arranged in the second direction Z2. In embodiments of the present disclosure, if one thin unit 140 is defined as a central thin unit 141, an array may be formed in which six thin units 142 (satellite thin units 142) surround the central thin unit 141. In one or more embodiments, the satellite thin units 142 surrounding the central thin unit 141 may be spaced apart from each other by regular (or substantially regular) intervals. The plurality of thin units 140 may be arranged in a state in which the distance between neighboring satellite thin units 142 is defined as the distance between the closest thin units 140. In embodiments of the present disclosure, the distance between the central thin unit 141 and each of the satellite thin units 142 surrounding the central thin unit 141 may be a first distance d1, and the distance between the neighboring satellite thin units 142 surrounding the central thin unit 141 may a second distance d2. The first distance d1 may be greater than the second distance d2, and the second distance d2 may be lower than the first distance d1. In embodiments of the present disclosure, as a design parameter of the thin unit 140 considered for setting the critical rupture pressure, the distance between the closest thin units 140 may represent the second distance d2.

In embodiments of the present disclosure, in the plurality of thin units 140, the distance (the second distance d2) between the thin units 140 adjacent to each other in the diagonal direction that follows both the first and second directions Z1 and Z2 may correspond to the distance between the closest thin units 140. In one or more embodiments, a rupture line BL in the diagonal direction may be formed while spacings between the closest thin units 140 adjacent to each other in the diagonal direction following both the first and second directions Z1 and Z2 are broken. In embodiments of present disclosure, in the thin pattern 150, the rupture line BL may not be formed as the spacings between the thin units 140 adjacent to each other in the first direction Z1 are broken, and the rupture line BL may not be formed as the spacings between the thin units 140 adjacent to each other in the second direction Z2 are broken. In one or more embodiments, the distance (the second distance d2) between thin units 140 adjacent to each other in the diagonal direction that follows both the first and second directions Z1 and Z2 may be relatively less than the distance between thin units 140 adjacent to each other in the first direction Z1 or the distance between thin units 140 adjacent to each other in the second direction Z2. In embodiments of the present disclosure, the rupture line BL along which the thin pattern 150 is ruptured by a preset critical rupture pressure may be formed in the diagonal direction that follows both the first and second directions Z1 and Z2, rather than being formed in the first direction Z1 or in the second direction Z2. In one or more embodiments, a dense array of thin units 140 may be formed while the thin units 140 in different rows adjacent to each other in the first direction Z1 are arranged in the valley regions G between the thin units 140 adjacent to each other in the second direction Z2 corresponding to the longitudinal direction of the insulating protective sheet 100. A sufficient distance may be set between the thin units 140 adjacent to each other in the second direction Z2 so as to secure the valley region G between the thin units 140 adjacent to each other in the second direction Z2.

Unlike in embodiments of present disclosure, if the distance between the thin units 140 adjacent to each other in the first direction Z1 is set to the minimum distance, for example, the distance between the closest thin units 140, it may be difficult to secure an appropriate rupture width because the length of the rupture line BL is reduced. In embodiments of present disclosure, in order to secure the sufficient rupture width while forming the rupture line BL in the diagonal direction following both the first and second directions Z1 and Z2, the distance between the thin units 140 adjacent to each other in the diagonal direction following both the first and second directions Z1 and Z2 may be set as the distance between the closest thin units 140.

In embodiments of present disclosure, the distance (the second distance d2) between the closest thin units 140 may be from a minimum of about (approximately) 0.3 mm to a maximum of about (approximately) 3 mm. For example, if the distance between the closest thin units 140 is less than the minimum value (approximately 0.3 mm), the critical rupture pressure for rupturing the insulating protective sheet 100 may be relatively reduced, which may initiate rupture under normal operating conditions or may cause rupture of the insulating protective sheet 100 during handling, such as distribution or assembly of the insulating protective sheet 100. For example, if the distance between the closest thin units 140 is greater than the maximum value (approximately 3 mm), the critical rupture pressure for rupturing the insulating protective sheet 100 may relatively increase, which may hinder the release of pressure from the inside of the battery cell C or the ejection of gas.

In embodiments of present disclosure, the critical rupture pressure for rupture of the insulating protective sheet 100 may be set as the critical rupture condition in which the size (the diameter Φ1) of the thin unit 140 and the distance (the second distance d2) between the closest thin units 140 are combined. For example, the critical rupture conditions may be considered as follows.

### i) Minimum conditions for critical rupture pressure

The diameter (the first diameter Φ1) of the open circle of the thin unit 140 is the maximum value (approximately 1 mm).

The distance (the second distance d2) between the closest thin units 140 is the minimum value (approximately 0.3 mm).

### ii) Maximum conditions for critical rupture pressure

The diameter (the first diameter Φ1) of the open circle of the thin unit 140 is the minimum value (approximately 0.5 mm).

The distance (the second distance d2) between the closest thin units 140 is the maximum value (approximately 3 mm).

In embodiments of the present disclosure, if the critical rupture pressure falls between the minimum and maximum conditions, an appropriate critical rupture pressure may be set. For example, if the diameter of the open circle of the thin unit 140 is between the maximum value and the minimum value, and the distance between the closest thin units 140 is between the minimum value and the maximum value, an appropriate critical rupture pressure may be set.

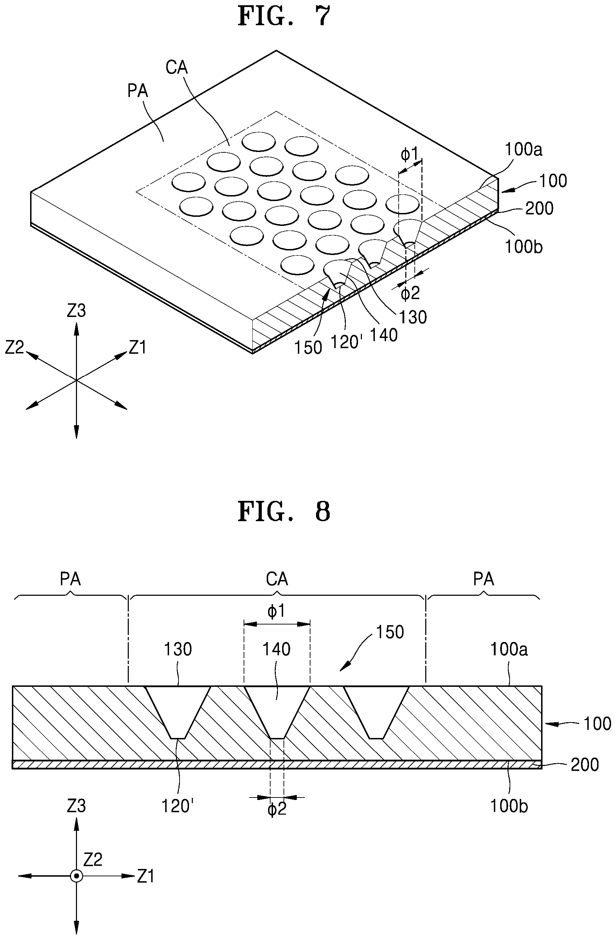

FIG. 7 shows an insulating protective sheet 100 according to other embodiments different from the insulating protective sheet 100 of FIG. 6.

FIG. 8 is a cross-sectional view of the insulating protective sheet 100 of FIG. 7.

In embodiments of the present disclosure, a thin unit 140 may form a sloping gradient cross-sectional profile. In embodiments of the present disclosure, the thin unit 140 may have a wedge shape that converges into a vertex from an open circle (a first diameter Φ1) in an outer surface 100a of an insulating protective sheet 100 opposite to a battery cell C (i.e. facing away from the battery cell C) toward an inner surface 100b of the insulating protective sheet 100 facing the battery cell C or may have a shape that converges from an open circle (a first diameter Φ1) of the outer surface 100a of the insulating protective sheet 100 into a circle having a reduced second diameter Φ2. The vertex may be a point without a diameter. In one or more embodiments, the vertex may be formed as an approximate point having the second diameter Φ2 less than the first diameter Φ1 in the open circle in the outer surface 100a of the insulating protective sheet 100 or may have a shape that converges into a circle having the reduced second diameter Φ2. In embodiments of the present disclosure, the relationship between the first diameter Φ1 open in the outer surface 100a of the insulating protective sheet 100 and the second diameter Φ2 of a vertex or reduced circle converging from the first diameter Φ1 may satisfy the following size relationship: the first diameter Φ1 may be less than approximately 10 times the second diameter Φ2. In embodiments of the present disclosure, the difference between the first diameter Φ1 and the second diameter Φ2 may not exceed approximately 10 times. In embodiments of the present disclosure, if the gradient is formed with a diameter difference of 10 times or more from a small thickness of the thin unit 140, which is formed with a substantially small thickness, the slope of the gradient is formed in an excessively flat state in the sloping gradient cross-sectional profile, which may result in damage to the insulating protective sheet 100 in handling. For example, even in situations unrelated to an event, such as distribution or assembly of the insulating protective sheet 100, damage to the insulating protective sheet 100 may occur due to careless handling. Additionally, the slope having the diameter difference of 10 times or more through a small thickness of the thin unit 140 may not be desirable considering the difficulty of a molding process. In FIGS. 7 and 8, the thin unit 140 may converge into the circular shape having the second diameter Φ2 less than the first diameter Φ1 from the open circle (the open structure 130) having the first diameter Φ1 of the outer surface 100a of the insulating protective sheet 100 toward the inner surface 100b of the insulating protective sheet 100. Reference number 120' may represent a closed structure 120' in the inner surface 100b of the insulating protective sheet 100.

In other embodiments of the present disclosure, the thin unit 140 may have a cross-sectional profile with a sloping gradient. In embodiments of present disclosure, the thin unit 140 may have the wedge shape that converges into the vertex from the open circle in the outer surface 100a of the insulating protective sheet 100 toward the inner surface 100b of the insulating protective sheet 100. In other embodiments of the present disclosure, the thin unit 140 may have a truncated wedge shape that converges into the vertex from the open circle in the outer surface 100a of the insulating protective sheet 100 toward the inner surface 100b of the insulating protective sheet 100. In one or more embodiments, the sloping gradient cross-sectional profile of the thin unit 140 may have a truncated wedge shape that converges from the open circle having the first diameter Φ1 in the outer surface 100a of the insulating protective sheet 100 into the circle having the second diameter Φ2 less than the first diameter Φ1.

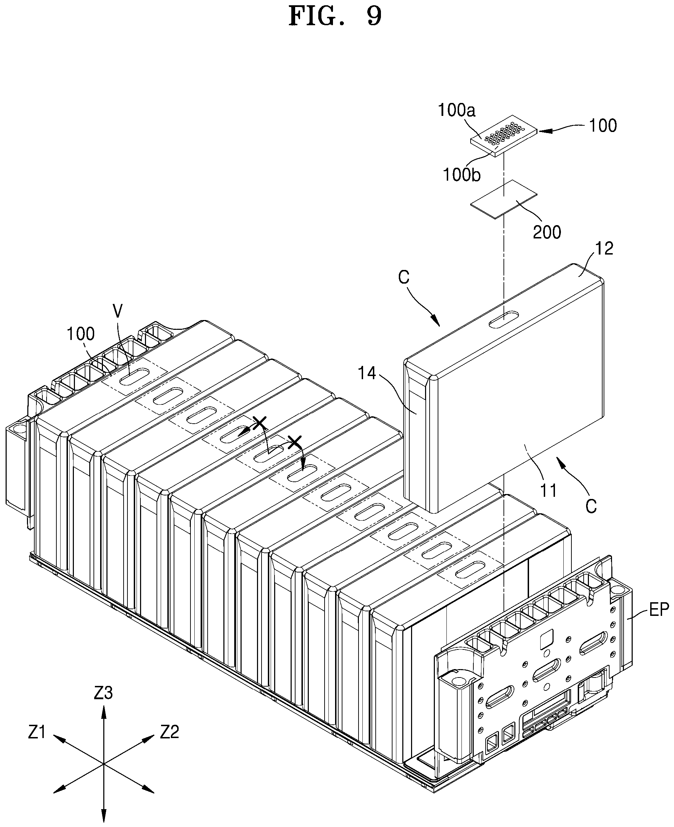

FIG. 9 is an exploded perspective view of a battery pack according to other embodiments of the present disclosure in which the cells are inverted versus that of Figure 1.

As shown in FIG. 1, the battery pack includes the insulating protective sheet 100 attached to a first surface of the battery cell C - corresponding to the upper surface 11 of the battery cell C - so as to cover the vent V formed in the first (herein upper) surface of the battery cell C. As shown in FIG. 9, however, the battery pack include the insulating protective sheet 100 attached to a first surface of the battery cell C that instead is corresponding to a lower surface 12 of the battery cell C so as to cover a vent V formed in the lower surface 12 of the battery cell C.

In the battery pack according to embodiments of present disclosure, the upper surface 11 and the lower surface 12 may represent surfaces that face each other at different levels (e.g. different heights) in a third direction Z3 that intersects with (e.g. is orthogonal to) first and second directions Z1 and Z2. In embodiments of the present disclosure, FIG. 9 shows a configuration in which the vent V is formed in the lower surface 12 of the battery cell C. Gravity may act in the downward direction and the buoyancy opposite to the gravity may act in the upward direction. In order to prevent (or at least mitigate) the flame emitted from the vent V facing down from rising toward other neighboring battery cells C due to the buoyancy and sequentially igniting other neighboring battery cells C, the insulating protective sheet 100 having the plurality of thin units 140 may be on the lower surface 12 of the battery cell C in which the vent V is formed.

Absent the insulating protective sheet 100, the flame may rise upward under the influence of the buoyancy of the rising airflow from the vent V formed in the lower surface 12, causing other neighboring battery cells C to explode and ignite in succession. In order to not only protect a cabin inside a vehicle located above the battery pack from direct flame from the vent V but also protect the neighboring battery cells C from the flame rising upward, the insulating protective sheet 100 including the plurality of thin units 140 may be on the lower surface 12 of the battery cell C and cover the vent V formed in the lower surface 12 of the battery cell C.

Throughout this specification, the insulating protective sheet 100 according to embodiments of the present disclosure may be on the surface of the battery cell C in which the vent V is formed. In various embodiments, the surface - known as the first surface of the battery cell C, on which the insulating protective sheet 100 is located, may represent at least one of the upper surface 11 or the lower surface 12 of the battery cell C.

In embodiments of present disclosure, the reference symbol EP in FIG. 1, which has not been described in the detailed description, may represent an end plate, and the reference symbols 20 and 21 may represent a cooling plate 20 and a cooling channel 21 of the cooling plate 20, respectively, for cooling the bottom of a plurality of battery cells C.

According to the present disclosure, the insulating protective sheet 100 having the plurality of thin units 140 may be on the vent V configured to discharge gas and/or to relieve pressure accumulated inside each of the plurality of battery cells C forming the battery pack. The battery pack may suppress eruption of flames or scattering of high-temperature solids in addition to relief of internal pressure or discharge of internal gas, thereby preventing (or at least mitigating) the spread of flames to other neighboring battery cells C and/or a chain of ignition between the neighboring battery cells C.

Embodiments are set out in the following clauses:
Clause 1. A battery pack comprising:
   a plurality of battery cells arranged in a first direction, each having a vent for discharging gas; and
   insulating protective sheets configured to respectively cover first surfaces of the plurality of battery cells in which the vents are formed, each of the insulating protective sheets having a thin pattern comprising an array of a plurality of thin units with sloping gradient cross-sectional profiles in a form converging from an open structure in an outer surface toward an inner surface of the insulating protective sheet, wherein each of the insulating protective sheets forms a closed structure in the inner surface of the insulating protective sheet facing the battery cell and forms the open structure in the outer surface of the insulating protective sheet opposite to the battery cell.
Clause 2. The battery pack as claimed in clause 1, wherein the thin pattern forms the closed structure in the inner surface of the insulating protective sheet to fluidly isolate an upper region from a lower region of the insulating protective sheet.
Clause 3. The battery pack as claimed in claim 1, wherein the plurality of thin units each have an open circular shape in the outer surface of the insulating protective sheet.
Clause 4. The battery pack as claimed in clause 3, wherein the plurality of thin units each have a wedge shape comprising a vertex into which the open circular shape in the outer surface of the insulating protective sheet converges toward the inner surface of the insulating protective sheet.
Clause 5. The battery pack as claimed in clause 3, wherein the plurality of thin units each have a truncated wedge shape in which an open circular shape having a first diameter in the outer surface of the insulating protective sheet converges, toward the inner surface of the insulating protective sheet, into a circular shape having a second diameter less than the first diameter.
Clause 6. The battery pack as claimed in clause 1, wherein the plurality of thin units each have a three-dimensional cone shape or a truncated cone shape.
Clause 7. The battery pack as claimed in clause 1, wherein the insulating protective sheet comprises:
   a central region comprising a dense arrangement of the plurality of thin units; and
   a peripheral region surrounding the central region and not comprising the thin pattern.
Clause 8. The battery pack as claimed in clause 7, wherein, in the inner surface of the insulating protective sheet facing the battery cell, the thin unit formed in the central region of the insulating protective sheet forms a substantially flat surface with the peripheral region of the insulating protective sheet.
Clause 9. The battery pack as claimed in clause 7, wherein, in the outer surface of the insulating protective sheet opposite to the battery cell, the thin unit formed in the central region of the insulating protective sheet forms a structure recessed from the peripheral region of the insulating protective sheet.
Clause 10. The battery pack as claimed in clause 1, wherein the insulating protective sheet comprises:
   a pair of long sides respectively extending, along a pair of main surfaces forming long sides of the first surface of the battery cell, in a second direction intersecting with the first direction and corresponding a longitudinal direction; and
   a pair of short sides respectively extending, along a pair of side surfaces forming short sides of the first surface of the battery cell, in the first direction corresponding to the width direction.
Clause 11. The battery pack as claimed in clause 1, wherein the plurality of thin units are arranged in a row in a second direction corresponding to a longitudinal direction of the insulating protective sheet, and arranged in a plurality of rows in the first direction corresponding to a width direction of the insulating protective sheet.
Clause 12. The battery pack as claimed in clause 1, wherein the plurality of thin units form a dense arrangement while valley regions between thin units adjacent to each other in a second direction corresponding to a longitudinal direction of the insulating protective sheet accommodate thin units in different rows adjacent to each other in the first direction.
Clause 13. The battery pack as claimed in clause 1, wherein the plurality of thin units are arranged such that one thin unit is selected as a central thin unit and a plurality of satellite thin units surround the central thin unit.
Clause 14. The battery pack as claimed in clause 13, wherein a second distance between the plurality of satellite thin units adjacent to each other along a circumference of the central thin unit is shorter than a first distance between the central thin unit and each of the plurality of satellite thin units.
Clause 15. The battery pack as claimed in clause 1, wherein the first surface of the battery cell in which the vent is formed corresponds to any one of an upper surface and a lower surface of the battery cell, which connect a pair of main surfaces facing each other in the first direction.
Clause 16. The battery pack as claimed in clause 1, wherein an adhesive tape is disposed on the inner surface of the insulating protective sheet and mediates a coupling between the insulating protective sheet and the first surface of the battery cell.
Clause 17. The battery pack as claimed in clause 16, wherein the insulating protective sheet comprises a central region, in which the thin pattern comprising a dense arrangement of the plurality of thin units is formed, and a peripheral region surrounding the central region and not comprising the thin pattern, and
   the adhesive tape covers an entire area of the insulating protective sheet across the central region and the peripheral region of the insulating protective sheet.
Clause 18. The battery pack as claimed in clause 16, wherein the plurality of thin units forming the thin pattern electrically insulates the first surface of the battery cell, based on a sum of a thickness of the adhesive tape and a thickness of the plurality of thin units corresponding to a thickness of the plurality of thin units remaining, as an open circular shape in the outer surface of the insulating protective sheet converges, toward the inner surface of the insulating protective sheet, into a vertex or a reduced circle.
Clause 19. The battery pack as claimed in clause 1, wherein the insulating protective sheet comprises aerogel or mica.
Clause 20. The battery pack as claimed in clause 1, wherein critical rupture pressure of the thin pattern is set from design parameters of the thin pattern which comprise a diameter of an open circular shape formed in the outer surface of the insulating protective sheet and a distance between closest thin units.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the present disclosure as defined by the following claims.

## Claims

1. A battery pack comprising:
a plurality of battery cells arranged in a first direction, each of the plurality of battery cells comprising a first surface and a vent in the first surface configured to discharge gas; and
a plurality of insulating protective sheets, each insulating protective sheet of the plurality of insulating protective sheets being configured to cover or overlie the first surface in which the vent is located,
wherein each insulating protective sheet of the plurality of insulating protective sheets has a thin pattern comprising an array of a plurality of thin units with sloping gradient cross-sectional profiles converging from an open structure in an outer surface toward an inner surface of the insulating protective sheet, and
wherein each insulating protective sheet of the plurality of insulating protective sheets has a closed structure at the inner surface of the each insulating protective sheet facing the battery cell and the open structure in the outer surface of the each insulating protective sheet opposite to the battery cell.

2. The battery pack as claimed in claim 1, wherein the closed structure in the inner surface of the each insulating protective sheet fluidly isolates an upper region from a lower region of the each insulating protective sheet.

3. The battery pack as claimed in claim 1 or claim 2, wherein each of the plurality of thin units has an open circular shape in the outer surface of the each insulating protective sheet, and optionally wherein each of the plurality of thin units has a wedge shape comprising a vertex into which the open circular shape in the outer surface of the each insulating protective sheet converges toward the inner surface of the each insulating protective sheet.

4. The battery pack as claimed in claim 3, wherein each of the plurality of thin units has a truncated wedge shape in which an open circular shape having a first diameter in the outer surface of the insulating protective sheet converges, in a direction toward the inner surface of the each insulating protective sheet, into a circular shape having a second diameter less than the first diameter.

5. The battery pack as claimed in any one of the preceding claims, wherein each of the plurality of thin units has a three-dimensional cone shape or a truncated cone shape.

6. The battery pack as claimed in any one of the preceding claim, wherein the each insulating protective sheet comprises:
a central region comprising a dense arrangement of the plurality of thin units; and
a peripheral region surrounding the central region and not comprising the thin pattern, and optionally wherein the inner surface of the each insulating protective sheet facing the battery cell is a substantially flat surface.

7. The battery pack as claimed in claim 6, wherein, in the outer surface of the each insulating protective sheet opposite to the battery cell, the thin unit in the central region of the each insulating protective sheet is recessed from the peripheral region of the each insulating protective sheet.

8. The battery pack as claimed in any one of the preceding claims, wherein the each insulating protective sheet comprises:
a pair of long sides respectively extending along a pair of main surfaces forming long sides of the first surface of the battery cell, the pair of long sides extending in a second direction intersecting with the first direction and corresponding a longitudinal direction; and
a pair of short sides respectively extending along a pair of side surfaces forming short sides of the first surface of the battery cell, the pair of short sides extending in the first direction corresponding to a width direction.

9. The battery pack as claimed in any one of the preceding claims, wherein the plurality of thin units are arranged in a plurality of rows in a second direction corresponding to a longitudinal direction of the each insulating protective sheet, and arranged in a plurality of rows in the first direction corresponding to a width direction of the insulating protective sheet.

10. The battery pack as claimed in any one of the preceding claims, wherein the plurality of thin units form a dense arrangement, and wherein valley regions between thin units adjacent to each other in a second direction corresponding to a longitudinal direction of the each insulating protective sheet accommodate thin units in different rows adjacent to each other in the first direction.

11. The battery pack as claimed in any one of the preceding claims, wherein the plurality of thin units comprises a central thin unit and a plurality of satellite thin units surrounding the central thin unit, and optionally wherein a second distance between the plurality of satellite thin units adjacent to each other along a circumference of the central thin unit is shorter than a first distance between the central thin unit and each of the plurality of satellite thin units.

12. The battery pack as claimed in any one of the preceding claims, wherein the first surface of the battery cell in which the vent is formed corresponds to any one of an upper surface or a lower surface of the battery cell.

13. The battery pack as claimed in any one of the preceding claims, further comprising an adhesive tape on the inner surface of the each insulating protective sheet, the adhesive tape coupling the each insulating protective sheet to the first surface of the battery cell, and optionally wherein the each insulating protective sheet comprises a central region including the thin pattern comprising a dense arrangement of the plurality of thin units, and a peripheral region surrounding the central region and not comprising the thin pattern, and
wherein the adhesive tape covers substantially an entire area of the each insulating protective sheet across the central region and the peripheral region of the each insulating protective sheet, and or optionally wherein the each insulating protective sheet and the adhesive tape electrically insulate the first surface of the battery cell based on a thickness of the adhesive tape and a thickness of the each insulating protective sheet at the thin pattern.

14. The battery pack as claimed in any one of the preceding claims, wherein the each insulating protective sheet comprises aerogel or mica.

15. The battery pack as claimed in any one of the preceding claims, wherein a critical rupture pressure of the thin pattern is set from design parameters of the thin pattern which comprise a diameter of an open circular shape formed in the outer surface of the insulating protective sheet and a distance between closest thin units of the plurality of thin units.
